# NEUE EUROPÄISCHE PATENTSCHRIFT

(11) **EP 4 101 796 B2**
(45) Veröffentlichungstag und Bekanntmachung des Hinweises auf die Entscheidung über den Einspruch: **15.04.2026**
(45) Hinweis auf die Patenterteilung: 16.08.2023
(21) Anmeldenummer: 21179078.7
(22) Anmeldetag: 11.06.2021
(51) Int. Cl.: B65H 18/02, B65H 23/04, B65H 18/10, B65H 23/195, B65H 23/198

(54) **AUFWICKELVORRICHTUNG FÜR EINE LÄNGSGESCHNITTENE MATERIALBAHN UND SYSTEM ZUM GEREGELTEN AUFWICKELN EINER LÄNGSGESCHNITTENEN MATERIALBAHN**
WINDING DEVICE FOR A LONGITUDINALLY CUT MATERIAL SHEET AND SYSTEM FOR CONTROLLED WINDING OF A LONGITUDINALLY CUT MATERIAL SHEET
DISPOSITIF D'ENROULEMENT D'UNE BANDE DE MATIÈRE COUPÉE EN LONGUEUR ET SYSTÈME D'ENROULEMENT RÉGULÉ D'UNE BANDE DE MATIÈRE COUPÉE EN LONGUEUR

(43) Veröffentlichungstag der Anmeldung: 14.12.2022
(73) Patentinhaber: FMS Force Measuring Systems AG, 8154 Oberglatt (CH)
(72) Erfinder: Inhelder, Jörg, 8309 Nürensdorf (CH)
(74) Vertreter: Zeuner Summerer Stütz

(56) Entgegenhaltungen:
- EP-A1- 3 725 715
- US-A- 3 424 395
- US-A- 4 063 692
- US-A- 4 181 270
- US-A- 5 478 025

## Beschreibung

Die Erfindung betrifft eine Vorrichtung zum Aufwickeln einer längsgeschnittenen Materialbahn mit mehreren Längsstreifen auf eine Mehrzahl von Wickelhülsen jeweils zu einer Wickelrolle. Die Erfindung betrifft weiter ein System zum geregelten Aufwickeln einer längsgeschnittenen Materialbahn mit mehreren Längsstreifen mit einer solchen Aufwickelvorrichtung.

In Anlagen zur Herstellung oder Weiterverarbeitung bahnförmiger Materialien, beispielsweise Papier, Kunststofffolien oder Alufolien, werden die Materialbahnen zu Beginn des Verarbeitungsprozesses mit Bahnbreiten von mehreren Metern verarbeitet. Oft werden für die Weiterverarbeitung, beispielsweise beim Etikettendruck oder der Verpackungsherstellung, deutlich schmalere Bahnen benötigt, und die Materialbahnen werden dazu auf Rollenschneidern in schmalere Längsstreifen der gewünschten Breite geschnitten.

Bei Bahnbreiten typischerweise bis zu etwa zwei Metern werden für diesen Zweck Sekundärrollenschneider mit durchgehenden Wellen für die Aufwicklung eingesetzt, die mit Überdrehzahl drehen und mit Friktion arbeiten. Auf der durchgehenden Welle sind Kartonhülsen angeordnet, auf die das geschnittene Material gewickelt wird. Nachteilig ist dabei, dass durch die Friktion einerseits viel Staub anfällt und andererseits der effektive Wickelzug sehr stark vom Reibkoeffizient der Kartonhülse auf der Welle abhängt.

Da die Reibkoeffizienten der Kartonhülsen stark variieren können, werden gegenwärtig vermehrt sogenannte Differentialwellen eingesetzt, bei denen die Reibstelle in der Friktionswelle integriert ist und die Kartonhülsen außen fest auf einem Außenring sitzen. Durch die Anordnung der Reibstelle innerhalb der Friktionswelle können genauere Reibkoeffizienten realisiert und Kartonabrieb vermieden werden. Allerdings ist auch bei solchen Differentialwellen eine exakte Regelung der einzelnen Züge nicht möglich, da sich jeder einzelne Wickelzug über die Überdrehzahl und die Reibung der Friktionsringe bestimmt. Ein weiterer Nachteil besteht darin, dass Fehler in einzelnen Wicklungen bei solchen Friktionswalzen während des Prozesses nur bei extremen Abweichungen festgestellt werden können, beispielsweise wenn das Material reißt oder vollständig lose ist. US 5 478 025 A offenbart ein Wickelsystem für mehrere Bahnen auf einer einzigen Wickelwelle. Dieses Dokument offenbart auch getrennte Wickelhülsen, die durch elektromagnetische Kupplungen mit gegebenen Antriebsbefehlen unabhängig voneinander gesteuert werden.

Hier setzt die Erfindung an. Der Erfindung, wie sie in den Ansprüchen gekennzeichnet ist, liegt die Aufgabe zugrunde, eine Aufwickelvorrichtung der eingangs genannten Art anzugeben, mit der die mehreren längsgeschnittenen Materialstreifen einer Materialbahn jeweils individuell kontrolliert zu einer Wickelrolle aufgewickelt werden können. Darüber hinaus soll ein vorteilhaftes System zum geregelten Aufwickeln einer längsgeschnittenen Materialbahn mit mehreren Längsstreifen bereitgestellt werden.

Diese Aufgabe wird durch die Merkmale der unabhängigen Ansprüche gelöst. Weiterbildungen der Erfindung sind Gegenstand der abhängigen Ansprüche. Gemäß der Erfindung enthält eine gattungsgemäße Vorrichtung zum Aufwickeln einer längsgeschnittenen Materialbahn eine Achse und eine Mehrzahl von auf der Achse aufsitzenden ringförmigen Wickelantrieben. In ihrer Betriebsposition sind die Wickelantriebe dabei individuell ansteuerbar. Auf ihrer Außenseite sind die Wickelantriebe jeweils zur Aufnahme einer Wickelhülse für die Aufwicklung eines Längsstreifens der Materialbahn eingerichtet.

Jeder Wickelantrieb bildet einen Außenläufer-Elektromotor und umfasst eine statische Innenhülse und eine drehbare Außenhülse. Dabei sitzt die statische Innenhülse verdrehgesichert und vorzugsweise mit geringem Spiel auf der Achse auf. Sie trägt auf ihrer Außenseite einen Stator mit Statorwicklungen des Elektromotors, sowie Wälzlager zur Aufnahme der drehbaren Außenhülse.

Die auf den Wälzlagern drehbare Außenhülse trägt auf ihrer Innenseite eine Einrichtung zum Bereitstellen eines Erregermagnetfelds, die den Außenläufer des Elektromotors bildet. Auf ihrer Außenseite weist die Außenhülse eine Blockiereinrichtung für die aufzunehmenden Wickelhülsen auf.

Erfindungsgemäß sind die Wickelantriebe separat auf der Achse verschiebbar und in einer axialen Betriebsposition, in welcher sie individuell ansteuerbar sind, arretierbar. Die Vorrichtung kann dadurch in einfacher Weise an die Aufwickelung verschiedener geschnittener Materialbahnen mit unterschiedlicher Anzahl und Position der Materialstreifen angepasst werden.

Die Einrichtung zum Bereitstellen eines Erregermagnetfelds ist vorteilhaft durch eine Mehrzahl von Permanentmagneten gebildet. Dies ermöglicht eine zuverlässige und wartungsarme, bürstenlose Ausbildung des Elektromotors.

Erfindungsgemäß ist die Achse mit sich in axialer Richtung im Wesentlichen über die gesamte Breite erstreckenden elektrischen Leitern versehen, die axial an jeder Stelle kontaktierbar sind und mit denen die Wickelantriebe in ihren Betriebspositionen mit elektrischer Energie und Betriebsdaten versorgbar und dadurch individuell ansteuerbar sind.

Die elektrischen Leiter der Achse umfassen vorteilhaft axiale Stromschienen, die in einer axial verlaufenden Führungskammer der Achse angeordnet sind.

Mit Vorteil ist jeder Wickelantrieb mit einem separaten Leistungsteil ausgestattet, das über die elektrischen Leiter der Achse ansteuerbar ist.

Zweckmäßig ist die statische Innenhülse zur Verdrehsicherung mit einer Drehmomentstütze versehen, die besonders bevorzugt in eine Ausnahme im Achsprofil der Achse eingreift.

Die Achse weist vorteilhaft eine axiale Nut und eine in der Nut angeordnete Klemmleiste für die Arretierung der Wickelantriebe auf. Die Klemmleiste kann beispielsweise durch Druckluft aktivierbar sein.

In einer vorteilhaften Weiterbildung der Erfindung weist die Achse zumindest eine Bohrung für einen Kühlwasserkanal auf.

Gemäß einer vorteilhaften Ausgestaltung ist die Achse als Strangprofil mit Ausnehmungen ausgebildet. Vorzugsweise dient dabei eine Ausnehmung der Aufnahme der Drehmomentstütze der statischen Innenhülse und/oder eine Ausnehmung bildet eine Führungskammer für die axial verlaufenden Stromschienen und/oder eine Ausnehmung bildet eine axiale Nut für die Klemmleiste zur Arretierung der Wickelantriebe und/oder zumindest eine Ausnehmung bildet eine Bohrung zur Ausbildung eines Kühlkanals.

Während die Ausbildung der Achse als Strangprofil gegenwärtig bevorzugt ist, kann die Achse alternativ auch auf andere Weise ausgebildet sein, beispielsweise als Schweißkonstruktion oder als gefräste Achse, bei der die erforderlichen Ausnehmungen in einen Vollkörper eingefräst sind.

Auf der Achse sind mit Vorteil zumindest zwei, drei, vier oder mehr Wickelantriebe angeordnet. In vorteilhaften Ausgestaltungen sind zwischen N=10 und N=20 Wickelantriebe (je einschließlich) auf der Achse angeordnet. Es versteht sich aber, dass je nach den Anforderungen in der Praxis auch eine kleinere oder größere Anzahl von Wickelantrieben auf der Achse vorgesehen sein kann.

Bei einer bevorzugten Ausgestaltung sind zum Aufwickeln einer längsgeschnittenen Materialbahn mit N ≥ 2 Längsstreifen N Wickelantriebe beabstandet auf der Achse angeordnet und arretiert und stehen in elektrischem Kontakt mit den Stromleitern, insbesondere den Stromschienen der Achse.

Die Wickelantriebe können alle dieselbe Breite aufweisen, oder es können auch unterschiedlich breite Wickelantriebe eingesetzt werden, beispielsweise zur Aufwicklung unterschiedlich breiter Längsstreifen. Für die Aufwicklung breiterer Längsstreifen können auch zwei oder mehr Wickelantriebe zusammengeschaltet werden.

Die Vorrichtung ist insbesondere zum Aufwickeln einer längsgeschnittenen Materialbahn mit einer Gesamtbreite von 2,50 m oder weniger, vorzugsweise von 2,00 m oder weniger, ausgelegt und eingerichtet.

Die Erfindung enthält auch ein System zum geregelten Aufwickeln einer längsgeschnittenen Materialbahn mit mehreren Längsstreifen auf eine Mehrzahl von Wickelhülsen jeweils zu einer Wickelrolle. Das System umfasst eine Aufwickelvorrichtung der beschriebenen Art, wobei jedem der aufzuwickelnden Längsstreifen ein individuell ansteuerbarer Wickelantrieb der Aufwickelvorrichtung zugeordnet ist. Das System umfasst weiter eine Kraftmessvorrichtung zur Erfassung von Bahnzügen der Längsstreifen der geschnittenen laufenden Materialbahn, und eine Regelungseinrichtung, die eingerichtet und ausgelegt ist, mittels der Kraftmessvorrichtung die Bahnzüge in den mehreren Längsstreifen der Materialbahn zu erfassen, die Bahnzüge mit Sollbahnzügen der einzelnen Längsstreifen für die Aufwicklung zu vergleichen und auf Grundlage des Vergleichs die zugeordneten Wickelantriebe der Aufwickelvorrichtung anzusteuern, um die erfassten Bahnzüge den vorbestimmten Sollbahnzügen anzupassen.

Vorteilhaft ist bei dem System vorgesehen, dass
- die Kraftmesseinrichtung eine Achse und auf der Achse abgestützte, von der Materialbahn umschlungene Messwalze aufweist,
- die Messwalze als segmentierte Messwalze mit zwei oder mehr Messsegmenten ausgebildet ist, welche separat auf der Achse verschiebbar und in einer Messposition auf der Achse arretierbar sind, um die Messsegmente entsprechend gewünschter Messpositionen in Querrichtung der Materialbahn zu positionieren, so dass Längsabschnitte der Materialbahn jeweils ein Messsegment umschlingen, wobei die Messsegmente zur Erfassung der Bahnzüge der Längsstreifen der längsgeschnittenen Materialbahn mit beabstandeten Walzenmänteln auf der Achse positioniert und arretiert sind,
- die Messsegmente jeweils einen Kraftaufnehmer umfassen, der der Bestimmung des Bahnzugs des das jeweilige Messsegment umschlingenden Längsabschnitts der Materialbahn dient und der eine Halterung bereitstellt, mit der das Messsegment auf der Achse aufsitzt, und
- die Achse mit sich im Wesentlichen in axialer Richtung über die gesamte Breite erstreckenden elektrischen Leitern versehen ist, die axial an jeder Stelle kontaktierbar sind und mit denen die von den Kraftaufnehmern der Messsegmente gelieferte Messsignale zu einer an einem Achsenende angeordneten Auswerteeinheit leitbar sind.

Mit der beschriebenen individuell motorisch geregelten Aufwickelvorrichtung können die eingangs genannten Nachteile, Probleme und Unwägbarkeiten herkömmlicher Aufwickelvorrichtungen überwunden werden. Das vorgeschlagene System ermöglicht durch ein Zusammenspiel der hier beschriebenen Aufwickelvorrichtung mit einer Kraftmesseinrichtung zur individuellen Messung des Bahnzugs auch für die Aufwicklung geschnittener Bahnen einen idealen regelungstechnischen Zustand zu erreichen, wie er in Maschinen zur Verarbeitung ungeschnittener Bahnen bereits seit einiger Zeit Standard ist.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: schematisch eine geschnittene Materialbahn mit Längsstreifen, die jeweils einzeln auf eine Kartonhülse aufgewickelt werden sollen,
- Fig. 2: schematisch eine erfindungsgemäße Aufwickelvorrichtung,
- Fig. 3: für ein Ausführungsbeispiel der Erfindung in perspektivischer Ansicht einen der Wickelantriebe auf der Achse,
- Fig. 4: schematisch einen Querschnitt durch den Wickelantrieb und die Achse der Fig. 3,
- Fig. 5: schematisch eine Schnittdarstellung des Wickelantriebs und der Achse in einer der Linie V-V entsprechenden Richtung der Fig. 4,
- Fig. 6: die Achse der Figuren 3 bis 5 separat, und
- Fig. 7: ein Ausführungsbeispiel einer Zugregelung mit einer erfindungsgemäßen Aufwickelvorrichtung im Zusammenspiel mit einer Kraftmesseinrichtung für die Erfassung der Bahnzüge der einzelnen Längsstreifen einer Materialbahn.

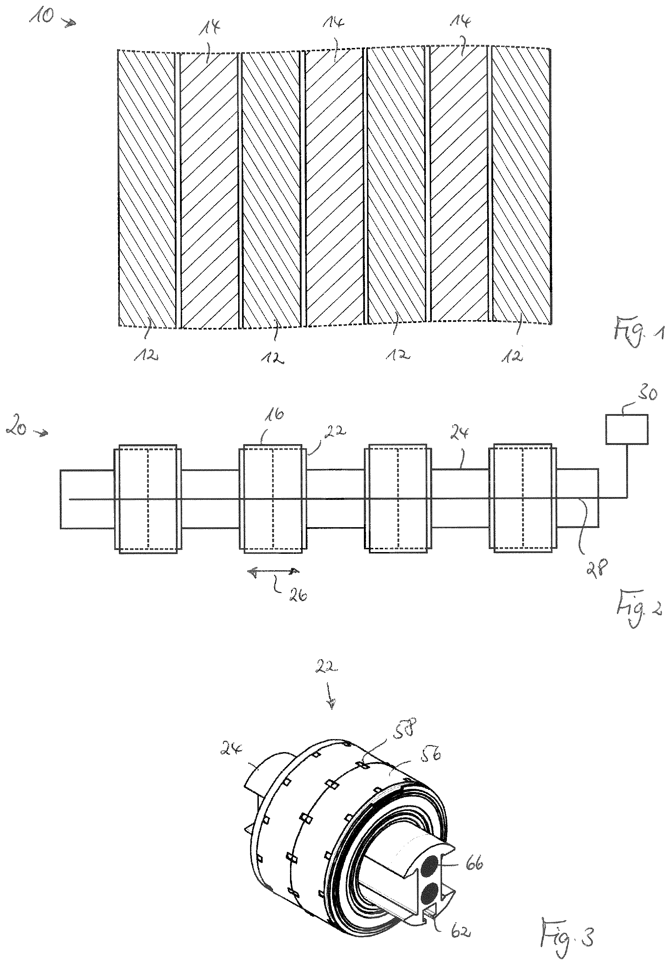

Die Erfindung wird nun anhand einer vorteilhaften Vorrichtung zum individuellen Aufwickeln einer längsgeschnittenen Materialbahn erläutert. Die beschriebene Vorrichtung stellt einen Sekundärrollenschneider dar, bei dem ein in Fig. 1 schematisch dargestellte Materialbahn 10 mit einer Gesamtbreite von typischerweise bis zu zwei Metern bereitgestellt wird, in schmalere Bahnen 12, 14 geschnitten wird und die schmaleren Bahnen 12, 14 auf entsprechend schmaleren Wickelhülsen wieder zu schmalen Wickelrollen aufgewickelt werden. Bei der Materialbahn 10 kann es sich beispielsweise um Etikettenmaterial, Kunststofffolien, Alufolien, Batteriefolien oder dergleichen handeln.

Die Laufrichtung der Materialbahn 10 definiert dabei eine Längsrichtung und eine dazu senkrechte Querrichtung. Nach dem Schneiden werden die geschnittenen Längsstreifen 12, 14 der Materialbahn 10 für die Aufwicklung typischerweise alternierend nach oben bzw. unten in unterschiedliche Ebenen geführt, so dass sich die ursprünglich in Querrichtung nebeneinander liegenden Längsstreifen bei der Aufwicklung nicht behindern.

Im Ausführungsbeispiel ist zur Illustration die Aufwicklung von N = 4 Längsstreifen 12 einer der beiden Ebenen gezeigt. Die Längsstreifen 12 der Materialbahn werden dabei von der nachfolgend beschriebenen Aufwickelvorrichtung 20 jeweils einzeln auf eine Kartonhülse 16 (Fig. 2) zu einer Wickelrolle aufgewickelt. Die zwischen den Längsstreifen 12 liegenden Längsstreifen 14 werden in analoger Weise in einer höher bzw. tiefer liegenden Ebene, beispielsweise von einer weiteren erfindungsgemäßen Vorrichtung aufgewickelt.

Zur Illustration ist eine Variante dargestellt, bei der die geschnittenen Längsstreifen 12, 14 der Materialbahn 10 alle dieselbe Breite aufweisen. Es ist allerdings ebenso möglich, dass die Materialbahn 10 in Längsstreifen unterschiedlicher Streifenbreite geschnitten wird und die unterschiedlich breiten Längsstreifen mit einer erfindungsgemäßen Vorrichtung aufgewickelt werden.

Mit Bezug auf die schematische Darstellung der Fig. 2 wird zum kontrollierten Aufwickeln der Längsstreifen 12 der Fig. 1 eine erfindungsgemäße Aufwickelvorrichtung 20 mit einer Mehrzahl von ringförmigen, individuell regelbaren Wickelantrieben 22 eingesetzt, die entsprechend der Vorgabe durch die aufzuwickelnden Längsstreifen 12 entlang der Querrichtung an bestimmten axialen Positionen einer biegesteifen Achse 24 arretiert sind.

Auf die Wickelantriebe 22 sind jeweils durch eine Blockiereinrichtung fixierte Kartonhülsen 16 aufgesteckt, auf welche die Längsstreifen 12 der Materialbahn 10 aufgewickelt werden. Figur 2 zeigt beispielhaft N=4 Wickelantriebe 22 für vier Längsstreifen 12 gleicher Breite, es versteht sich aber, dass bei Bedarf auch mehr als vier Wickelantriebe und/oder Wickelantriebe für die Aufwicklung unterschiedlich breiter Längsstreifen 12 auf einer Achse 24 angeordnet werden können.

Die Achse 24 ist als intelligente Achse ausgebildet, die sich in axialer Richtung im Wesentlichen über die ganze Breite erstreckende elektrische Leiter 28 aufweist, welche axial an jeder Stelle von den Wickelantrieben 22 kontaktierbar sind. Im Ruhezustand der Vorrichtung können die Wickelantriebe 22 nach Bedarf auf die Achse aufgesetzt werden, axial entlang der Achse verschoben werden (Bezugszeichen 26) und in einer beliebigen axialen Betriebsposition arretiert werden.

Die Wickelantriebe kontaktieren in ihrer Betriebsposition die elektrischen Leiter 28 und werden so von einer Stromversorgungs- und Steuereinrichtung 30 mit elektrischer Energie und Betriebsdaten versorgt. Die elektrischen Leiter 28 können auf der Außenseite der Achse 24, beispielsweise in einer axialen Nut verlaufen, sind aber vorzugsweise in einer innenliegenden axialen Führungskammer der Achse 24 angeordnet, wie weiter unten genauer ausgeführt.

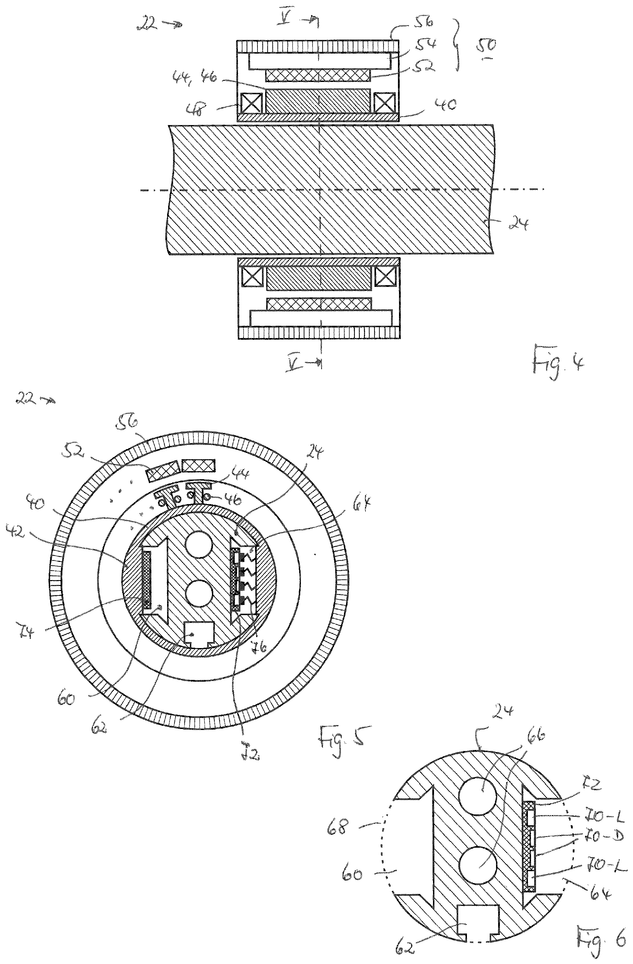

Eine vorteilhafte Ausbildung der Wickelantriebe 22 und der intelligenten Achse 24 wird nun mit Bezug auf die Figuren 3 bis 6 näher beschrieben. Dabei zeigt Fig. 3 einen von mehreren gleichartigen Wickelantrieben 22 in perspektiver Ansicht auf der Achse 24, Figur 4 zeigt schematisch einen Querschnitt durch den Wickelantrieb 22 und die Achse 24 der Fig. 3, und Figur 5 zeigt schematisch eine Schnittdarstellung des Wickelantriebs 22 und der Achse 24 in einer der Linie V-V entsprechenden Richtung der Fig. 4. In Fig. 5 ist auch die innere Struktur der Achse 24 dargestellt, welche in Fig. 4 der klareren Darstellung halber weggelassen ist. Figur 6 zeigt die Achse 24 der Figuren 3 bis 5 nochmals separat.

Anstelle einer von herkömmlichen Sekundärrollenschneidern bekannten, mit Überdrehzahl und Friktion arbeitenden Welle, wird bei der erfindungsgemäßen Aufwickelvorrichtung eine stabile Achse 24 eingesetzt, die auch bei den erwarteten hohen Gewichten der auf die Kartonhülsen gewickelten Materialrollen kaum Durchbiegung zeigt. Entsprechend der Vorgabe durch Position und Breite der aufzuwickelnden Längsstreifen 12 der Materialbahn 10 sind auf der Achse 24 eine gewünschte Anzahl von Wickelantrieben 22 an den benötigten axialen Positionen angeordnet und arretiert. Jeder der Wickelantriebe 22 kann auf seiner Außenseite eine Kartonhülse 16 (Fig. 2) aufnehmen, auf der das Material der Längsstreifen 12 aufgewickelt wird.

Die Wickelantriebe 22 bilden jeweils einen Außenläufer-Elektromotor, der eine statische Innenhülse 40 und eine drehbare Außenhülse 50 umfasst. Jeder Wickelantrieb 22 baut auf der Achse 24 mit der statischen Innenhülse 40 auf, die mit minimalem Spiel auf der Achse 24 aufsitzt und dadurch im Ruhezustand der Vorrichtung eine axiale Verschiebung des Wickelantriebs 22 an eine gewünschte Position erlaubt. Zur Verdrehsicherung der Wickelantriebe 22 ist die Innenhülse 40 mit einer Drehmomentstütze 42 versehen, die in eine Ausnahme 60 im Profil der Achse 24 eingreift. Dort wird auch das gesamte Drehmoment des Wickelantriebs 22 aufgenommen.

Auf ihrer Außenseite trägt die Innenhülse 40 einen Stator 44 mit den Statorwicklungen 46 des Elektromotors, sowie Wälzlager 48 zur Aufnahme der drehbaren Außenhülse 50, welche auf einer äußeren Lauffläche des Wälzlagers 48 liegt. Auf der Innenseite der Außenhülse 50 sind in einer Aufnahme 54 angebrachte Permanentmagnete 52 vorgesehen, die jeweils den Außenläufer des Elektromotors bilden und durch einen schmalen Luftspalt von dem Stator 44 getrennt sind. Figur 5 zeigt der klareren Darstellung halber nur einen Teil des Stators 44 mit Statorzähnen, den dazwischenliegenden Statornuten und den um die Statorzähne gewickelten Statorwicklungen 46, sowie der Permanentmagnete 52. Die Fortsetzung des Stators und der Außerläufer-Permanentmagnete entlang des Umfangs des Wickelantriebes ist jeweils durch Punkte angedeutet.

Auf ihrer Außenseite enthält die Außenhülse 50 einen Friktionsring 56, der mit einer Blockiervorrichtung 58 (Fig. 3) für die von dem Wickelantrieb 22 aufzunehmenden Kartonhülsen 16 versehen ist. Der Friktionsring 56 kann beispielsweise als Kugelfriktionsring mit in Rollennaben laufenden Kugeln ausgebildet sein.

Um nach der axialen Positionierung der Wickelantriebe 22 ein Verrutschen auf der Achse im Betrieb zu vermeiden, ist in einer axialen Nut 62 der Achse 24 eine Klemmleiste (nicht dargestellt) vorgesehen, die insbesondere durch Druckluft aktiviert werden kann und nach Aktivierung die Wickelantriebe 22 sicher in der gewählten axialen Position hält.

Die für die Wickelantriebe 22 benötigte elektrische Energie und die erforderlichen Betriebsdaten werden an jeder axialen Position durch Stromschienen 70-L bzw. 70-D zur Verfügung gestellt, die in einer Führungskammer 64 der Achse 24 verlegt sind und im Betrieb von jedem Wickelantrieb 22 dauernd kontaktiert sind (Bezugszeichen 76). Um die Anzahl der Stromschienen klein zu halten, verfügt im Ausführungsbeispiel jeder Wickelantrieb 22 über ein eigenes Leistungsteil 74, so dass zwei Stromschienen für die Leistungszuführung und zwei weitere Stromschienen für die Übertragung der Betriebsdaten für alle Antriebe genügen. Diese vier Stromschienen 70-L, 70-D sind in einer isolierten Halterung 72 angeordnet, die fest mit der Achse 24 verbunden ist.

Da im Betrieb der Aufwickelvorrichtung 20 aufgrund der Wirkungsgrade der Elektromotoren und der Leistungsteile nicht unerhebliche Verluste anfallen können, sind im Ausführungsbeispiel im Zentrum der Achse 24 zwei Bohrungen 66 für einen Kühlwasserkanal vorgesehen. Die Ausstattung herkömmlicher Friktionswellen mit Kühlwasserkanälen ist dagegen prinzipbedingt nicht möglich, da die Wellen einerseits drehen und andererseits der gesamte Bauraum für die Reibungserzeugung benötigt wird.

Die Achse 24 der Vorrichtung 20 ist im Ausführungsbeispiel als Strangprofil ausgeführt, was eine biegesteife Ausbildung der Achse erlaubt, die sich auch bei hoher Belastung durch die aufgewickelten Materialrollen nicht oder nur minimal verformt. Mit Bezug auf Fig. 6 weist das Strangprofil einen kreisförmigen Querschnittsumfang 68 auf und ist durch einen breiten zentralen vertikalen Steg gekennzeichnet, der die Stabilität der Achse sicherstellt. Innerhalb des kreisförmigen Querschnittsumfangs 68 sind in dem Strangprofil mehrere Ausnehmungen 60, 62, 64, 66 mit unterschiedlichen Funktionen vorgesehen. Konkret nimmt die Ausnehmung 60 die Drehmomentstütze 42 der Innenhülse 40 auf, die Ausnehmung 64 bildet eine Führungskammer für die Stromschienen 70, die Ausnehmung 62 bildet eine Nut für die Klemmleiste zur Arretierung der Wickelantriebe 22 und die Bohrungen 66 dienen der Ausbildung des genannten Kühlkanals.

Die Elektromotoren der Wickelantriebe 22 sind vorzugsweise so ausgelegt, dass sie bei maximalem Wickeldurchmesser auch den maximalen Bahnzug, beziehungsweise das entsprechende Drehmoment aufbringen können und bei minimalem Wickeldurchmesser die höchste Drehzahl aufbringen können.

Mit besonderem Vorteil kann eine erfindungsgemäße Aufwickelvorrichtung 20 mit einer Kraftmesseinrichtung, die die Bahnzüge der einzelnen Längsstreifen 12 der Materialbahn 10 erfasst, kombiniert werden, um einen idealen regelungstechnischen Zustand bei der Aufwickelung der Materialstreifen zu verwirklichen.

Eine geeignete Kraftmessvorrichtung zur Erfassung von Bahnzügen einer laufenden Materialbahn ist in der Anmeldung PCT/EP2021/057456 derselben Anmelderin beschrieben. Als wesentliche Elemente weist eine solche Kraftmesseinrichtung eine Achse und eine auf der Achse abgestützte, von der Materialbahn umschlungene Messwalze auf. Die Messwalze ist dabei als segmentierte Messwalze mit zwei oder mehr Messsegmenten ausgebildet, welche separat auf der Achse verschiebbar und in einer Messposition auf der Achse arretierbar sind, um die Messsegmente entsprechend gewünschter Messpositionen in Querrichtung der Materialbahn zu positionieren, so dass Längsabschnitte der Materialbahn jeweils ein Messsegment umschlingen. Die Messsegmente enthalten jeweils einen Kraftaufnehmer, der der Bestimmung des Bahnzugs des das jeweilige Messsegment umschlingenden Längsabschnitts der Materialbahn dient und der eine Halterung bereitstellt, mit der das Messsegment auf der Achse aufsitzt. Die Achse ist mit sich im Wesentlichen in axialer Richtung über die gesamte Breite erstreckenden elektrischen Leitern versehen, die axial an jeder Stelle kontaktierbar sind und mit denen die von den Kraftaufnehmern der Messsegmente gelieferte Messsignale zu einer an einem Achsenende angeordneten Auswerteeinheit leitbar sind. Weitere Einzelheiten zur Funktionsweise und zu vorteilhaften Ausgestaltungen der Kraftmessvorrichtung können der oben genannten internationalen Anmeldung PCT/EP2021/057456 entnommen werden.

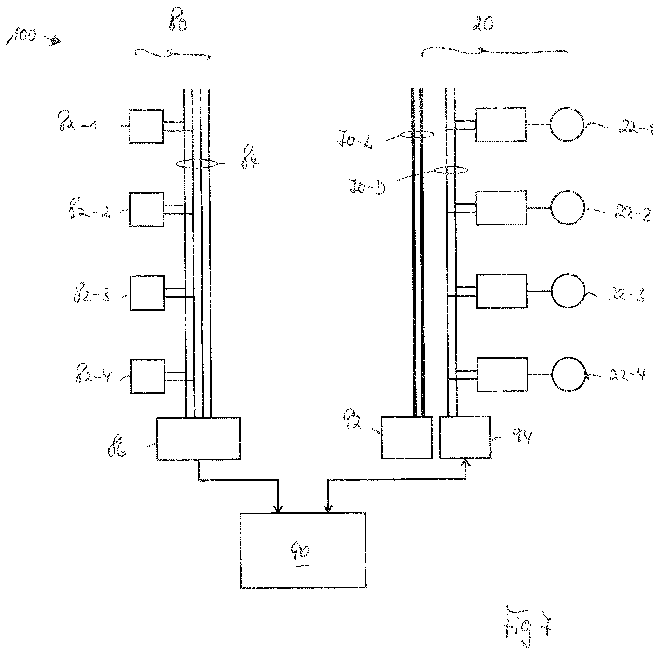

Figur 7 illustriert als Ausführungsbeispiel die Zugregelung in einem System 100 zum geregelten Aufwickeln einer längsgeschnittenen Materialbahn 10 mit mehreren Längsstreifen 12 auf eine Mehrzahl von Wickelhülsen jeweils zu einer Wickelrolle. Eine erfindungsgemäße Aufwickelvorrichtung 20 wirkt dabei mit einer oben genannten Kraftmesseinrichtung 80 für die Erfassung der Bahnzüge der Längsstreifen 12 einer Materialbahn 10 zusammen.

Der einfacheren Darstellung halber wird in Fig. 7 wieder von der Aufwicklung von nur N=4 Längsstreifen einer Materialbahn ausgegangen, es versteht sich aber, dass auch eine größere Anzahl, beispielsweise bis zu N=40 Längsstreifen gleichzeitig mit einer erfindungsgemäßen Aufwickelvorrichtung geregelt aufgewickelt werden können.

Der linke Bildteil der Fig. 7 betrifft die Erfassung der Bahnzüge der N Längsstreifen mit Hilfe der Kraftmessvorrichtung 80. Hierzu weist die Messwalze der Kraftmessvorrichtung N=4 Messsegmente 82-1 bis 82-4 auf, deren Messsignale über Stromleitungen 84 zu einer Auswerteeinheit 86 geleitet werden. Die Stromleitungen 84 umfassen neben zwei Leitungen für die Stromversorgung der Messsegmente auch zwei Datenleitungen, mit denen die digitalisierten Messsignale über ein Busprotokoll zu der Auswerteeinheit 86 geführt werden.

Auf Grundlage der erhaltenen Messsignale gibt die Auswerteeinheit 86 Betriebsdaten, die den Ist-Zustand der Bahnzüge in den N aufzuwickelnden Längsstreifen 12 beschreiben, an eine zentrale Regeleinheit 90 weiter, die die Regelungseinrichtung des Systems 100 bildet.

Der rechte Bildteil der Fig. 7 illustriert die Ansteuerung der N=4 Wickelantriebe 22-1 bis 22-4 der Aufwickelvorrichtung 20. Von einer Stromversorgung 92 gehen zwei Stromschienen 70-L aus, die der Leistungszuführung der Wickelantriebe 22 dienen. Zwei weitere Stromschienen 70-D sind für den bidirektionalen Datenaustausch zwischen einer Steuereinheit 94 der Aufwickelvorrichtung 20 und dem jeweiligen Leistungsteil der Wickelantriebe 22-1 bis 22-4 vorgesehen.

Im Betrieb wird in der Regeleinheit 90 aus den von der Kraftmesseinrichtung 80 ermittelten Ist-Werten der Bahnzüge für die N Längsstreifen jeweils eine Regelabweichung ermittelt und aus dieser Regelabweichung geeignete Stellwerte für den Strom oder die Drehzahl der Elektromotoren der zugehörigen Wickelantriebe 22-1 bis 22-4 bestimmt. Die ermittelten Stellwerte werden an die Steuereinheit 94 der Aufwickelvorrichtung 20 und von dieser an die Leistungsteile der Wickelantriebe 22-1 bis 22-4 übertragen, wo auf Grundlage der übermittelten Stellwerte die Antriebe entsprechend angesteuert werden.

Als Rückmeldung übermitteln die Wickelantriebe 22 über die Stromschienen 70-D jeweils den Status der Leistungsteile, den Motorstrom und die Drehzahl an die Steuereinheit 94, welche diese Daten an die Regeleinheit 90 weiterleitet.

Es versteht sich, dass die Ausgestaltung der beschriebenen Regelungseinrichtung nur beispielhaft ist und dass beispielsweise die Aufteilung der Einheiten 86, 90 und 94 bei der Regelung des Systems auch in anderer Weise vorgenommen werden kann.

## Patentansprüche

1. Vorrichtung (20) zum Aufwickeln einer längsgeschnittenen Materialbahn mit mehreren Längsstreifen (12) auf eine Mehrzahl von Wickelhülsen (16) jeweils zu einer Wickelrolle, mit
- einer Achse (24) und einer Mehrzahl von auf der Achse aufsitzenden ringförmigen Wickelantrieben (22), die in ihrer Betriebsposition individuell ansteuerbar sind, und die auf ihrer Außenseite jeweils zur Aufnahme einer Wickelhülse (16) für die Aufwicklung eines Längsstreifens (12) der Materialbahn eingerichtet sind,
- wobei jeder Wickelantrieb (22) einen Außenläufer-Elektromotor bildet und eine statische Innenhülse (40) und eine drehbare Außenhülse (50) umfasst, wobei
- die statische Innenhülse (40) verdrehgesichert auf der Achse (24) aufsitzt, und auf ihrer Außenseite einen Stator (44) mit Statorwicklungen des Elektromotors, sowie Wälzlager (48) zur Aufnahme der drehbaren Außenhülse (50) trägt,
- die auf den Wälzlagern (48) drehbare Außenhülse (50) auf ihrer Innenseite eine Einrichtung zum Bereitstellen eines Erregermagnetfelds (52) trägt, die den Außenläufer des Elektromotors bildet, und auf ihrer Außenseite eine Blockiereinrichtung (58) für die aufzunehmenden Wickelhülsen aufweist,
- die Wickelantriebe (22) separat auf der Achse (24) verschiebbar und in einer axialen Betriebsposition, in welcher sie individuell ansteuerbar sind, arretierbar sind, und
- die Achse mit sich in axialer Richtung im Wesentlichen über die gesamte Breite erstreckenden elektrischen Leitern (28) versehen ist, die axial an jeder Stelle kontaktierbar sind, und mit denen die Wickelantriebe (22) in ihren Betriebspositionen mit elektrischer Energie und Betriebsdaten versorgbar und dadurch individuell ansteuerbar sind.

2. Vorrichtung nach Anspruch 1, **dadurch gekennzeichnet, dass** die Einrichtung zum Bereitstellen eines Erregermagnetfelds durch eine Mehrzahl von Permanentmagneten (52) gebildet ist.

3. Vorrichtung nach Anspruch 1 oder 2, **dadurch gekennzeichnet, dass** die elektrischen Leiter (28) der Achse axiale Stromschienen umfassen, die in einer axial verlaufenden Führungskammer (64) der Achse angeordnet sind.

4. Vorrichtung nach wenigstens einem der Ansprüche 1 bis 3, **dadurch gekennzeichnet, dass** jeder Wickelantrieb mit einem separaten Leistungsteil (74) ausgestattet ist, das über die elektrischen Leiter (28) der Achse ansteuerbar ist.

5. Vorrichtung nach wenigstens einem der Ansprüche 1 bis 4, **dadurch gekennzeichnet, dass** die statische Innenhülse (40) zur Verdrehsicherung mit einer Drehmomentstütze (42) versehen ist, die vorzugsweise in eine Ausnahme (60) im Achsprofil der Achse (24) eingreift.

6. Vorrichtung nach wenigstens einem der Ansprüche 1 bis 5, **dadurch gekennzeichnet, dass** die Achse eine axiale Nut (62) und eine in der Nut angeordnete Klemmleiste für die Arretierung der Wickelantriebe aufweist, welche vorzugsweise durch Druckluft aktivierbar ist.

7. Vorrichtung nach wenigstens einem der Ansprüche 1 bis 6, **dadurch gekennzeichnet, dass** die Achse zumindest eine Bohrung (66) für einen Kühlwasserkanal aufweist.

8. Vorrichtung nach wenigstens einem der Ansprüche 1 bis 7, **dadurch gekennzeichnet, dass** die Achse (24) als Strangprofil mit Ausnehmungen (60, 62, 64, 66) ausgebildet ist, wobei vorzugsweise eine Ausnehmung (60) der Aufnahme der Drehmomentstütze der statischen Innenhülse dient und/oder eine Ausnehmung (64) eine Führungskammer für die axial verlaufenden Stromschienen bildet und/oder eine Ausnehmung (62) eine axiale Nut für die Klemmleiste zur Arretierung der Wickelantriebe bildet und/oder zumindest eine Ausnehmung (66) eine Bohrung zur Ausbildung eines Kühlkanals bildet.

9. Vorrichtung nach wenigstens einem der Ansprüche 1 bis 8, **dadurch gekennzeichnet, dass** auf der Achse (24) zumindest zwei, drei, vier oder mehr Wickelantriebe (22) angeordnet sind.

10. Vorrichtung nach wenigstens einem der Ansprüche 1 bis 9, **dadurch gekennzeichnet, dass** zum Aufwickeln einer längsgeschnittenen Materialbahn (10) mit N ≥ 2 Längsstreifen (12) N Wickelantriebe (22) beabstandet auf der Achse angeordnet und arretiert sind und vorteilhaft in elektrischem Kontakt mit Stromleitern (28), insbesondere Stromschienen der Achse stehen.

11. Vorrichtung nach wenigstens einem der Ansprüche 1 bis 10, **dadurch gekennzeichnet, dass** die Vorrichtung zum Aufwickeln einer längsgeschnittenen Materialbahn mit einer Gesamtbreite von 2,50 m oder weniger, insbesondere 2,00 m oder weniger ausgelegt und eingerichtet ist.

12. System (100) zum geregelten Aufwickeln einer längsgeschnittenen Materialbahn (10) mit mehreren Längsstreifen (12) auf eine Mehrzahl von Wickelhülsen (16) jeweils zu einer Wickelrolle, mit
- einer Aufwickelvorrichtung (20) nach einem der Ansprüche 1 bis 11, wobei jedem der aufzuwickelnden Längsstreifen (12) ein individuell ansteuerbarer Wickelantrieb (22) der Aufwickelvorrichtung zugeordnet ist,
- einer Kraftmessvorrichtung (80) zur Erfassung von Bahnzügen der Längsstreifen (12) der geschnittenen laufenden Materialbahn, und
- einer Regelungseinrichtung (90), die eingerichtet und ausgelegt ist, mittels der Kraftmessvorrichtung (80) die Bahnzüge in den mehreren Längsstreifen (12) der Materialbahn zu erfassen, die Bahnzüge mit Sollbahnzügen der einzelnen Längsstreifen (12) für die Aufwicklung zu vergleichen und auf Grundlage des Vergleichs die zugeordneten Wickelantriebe (22) der Aufwickelvorrichtung (20) anzusteuern, um die erfassten Bahnzüge den vorbestimmten Sollbahnzügen anzupassen.

13. System (100) nach Anspruch 12, **dadurch gekennzeichnet, dass**
- die Kraftmesseinrichtung eine Achse und auf der Achse abgestützte, von der Materialbahn umschlungene Messwalze aufweist,
- die Messwalze als segmentierte Messwalze mit zwei oder mehr Messsegmenten ausgebildet ist, welche separat auf der Achse verschiebbar und in einer Messposition auf der Achse arretierbar sind, um die Messsegmente entsprechend gewünschter Messpositionen in Querrichtung der Materialbahn zu positionieren, so dass Längsabschnitte der Materialbahn jeweils ein Messsegment umschlingen, wobei die Messsegmente zur Erfassung der Bahnzüge der Längsstreifen der längsgeschnittenen Materialbahn mit beabstandeten Walzenmänteln auf der Achse positioniert und arretiert sind,
- die Messsegmente jeweils einen Kraftaufnehmer umfassen, der der Bestimmung des Bahnzugs des das jeweilige Messsegment umschlingenden Längsabschnitts der Materialbahn dient und der eine Halterung bereitstellt, mit der das Messsegment auf der Achse aufsitzt, und
- die Achse mit sich im Wesentlichen in axialer Richtung über die gesamte Breite erstreckenden elektrischen Leitern versehen ist, die axial an jeder Stelle kontaktierbar sind und mit denen die von den Kraftaufnehmern der Messsegmente gelieferte Messsignale zu einer an einem Achsenende angeordneten Auswerteeinheit leitbar sind.

## Claims

1. A device (20) for winding a longitudinally cut material web having multiple longitudinal strips (12) onto a plurality of winding tubes (16) to form in each case a wound roll, having
- an axle (24) and, mounted on the axle, a plurality of ring-shaped winding drives (22) that are individually controllable in their operating position and that are each adapted on their exterior to receive a winding tube (16) for winding a longitudinal strip (12) of the material web,
- **characterized in that** each winding drive (22) forms an external rotor electric motor and comprises a static interior tube (40) and a rotatable external tube (50),
- the static interior tube (40) being mounted on the axle (24) in a manner that prevents rotation and bearing, on its exterior, a stator (44) having stator windings of the electric motor, as well as rolling bearings (48) for receiving the rotatable external tube (50), and
- the external tube (50) that is rotatable on the rolling bearings (48) bearing, on its interior, a device for providing an excitation magnetic field (52) that forms the external rotor of the electric motor, and comprising, on its exterior, a blocking device (58) for the winding tubes to be received, and
- the winding drives (22) are separately slidable on the axle (24) and lockable in an axial operating position in which they individually are controllable.

2. The device according to claim 1, **characterized in that** the device for providing an excitation magnetic field is formed by a plurality of permanent magnets (52).

3. The device according to at least one of claims 1 to 2, **characterized in that** the axle is furnished with electrical conductors (28) that extend substantially across the entire width in the axial direction, that are axially contactable at every position, and with which the winding drives (22) are suppliable in their operating positions with electrical energy and operating data and in this way are individually controllable.

4. The device according to claim 3, **characterized in that** the electrical conductors (28) of the axle comprise axial power rails that are arranged in an axially running guide chamber (64) in the axle.

5. The device according to claim 3 or 4, **characterized in that** every winding drive is equipped with a separate power element (74) that is controllable via the electrical conductor (28) of the axle.

6. The device according to at least one of claims 1 to 5, **characterized in that**, to prevent rotation, the static interior tube (40) is furnished with a torque support (42) that preferably meshes with a recess (60) in the axle profile of the axle (24).

7. The device according to at least one of claims 1 to 6, **characterized in that** the axle comprises an axial groove (62) and, arranged in the groove, a terminal block for locking the winding drives, which terminal block is preferably activatable by compressed air.

8. The device according to at least one of claims 1 to 7, **characterized in that** the axle comprises at least one bore (66) for a cooling water channel.

9. The device according to at least one of claims 1 to 8, **characterized in that** the axle (24) is formed as an extruded profile having recesses (60, 62, 64, 66), preferably with one recess (60) serving to receive the torque support of the static interior tube and/or one recess (64) forming a guide chamber for the axially running power rails and/or one recess (62) forming an axial groove for the terminal block for locking the winding drives, and/or at least one recess (66) forming a bore to form a cooling channel.

10. The device according to at least one of claims 1 to 9, **characterized in that** at least two, three, four or more winding drives (22) are arranged on the axle (24).

11. The device according to at least one of claims 1 to 10, **characterized in that**, for winding a longitudinally cut material web (10) having N ≥ 2 longitudinal strips (12), N winding drives (22) are arranged and locked spaced apart on the axle and are advantageously in electrical contact with conductors (28), especially power rails in the axle.

12. The device according to at least one of claims 1 to 11, **characterized in that** the device is arranged and adapted for winding a longitudinally cut material web having a total width of 2.50 m or less, especially 2.00 m or less.

13. A system (100) for the controlled winding of a longitudinally cut material web (10) having multiple longitudinal strips (12) onto a plurality of winding tubes (16) to form in each case a wound roll, having
- a winding device (20) according to one of claims 1 to 12, an individually controllable winding drive (22) of the winding device being assigned to each of the longitudinal strips (12) to be wound,
- a force measuring device (80) for measuring web tensions of the longitudinal strips (12) of the cut running material web, and
- a control system (90) that is adapted and arranged to measure, by means of the force measuring device (80), the web tensions in the multiple longitudinal strips (12) of the material web, to compare, for the winding, the web tensions with set web tensions of the individual longitudinal strips (12), and based on the comparison, to control the assigned winding drives (22) of the winding device (20) in order to adapt the measured web tensions to the predetermined set web tensions.

14. The system (100) according to claim 13, **characterized in that**
- the force measuring device comprises an axle and, supported on the axle, a measuring roller wrapped around by the material web,
- the measuring roller is formed as a segmented measuring roller having two or more measuring segments that are separately slidable on the axle and lockable in a measuring position on the axle in order to position the measuring segments in the transverse direction of the material web in accordance with desired measuring positions such that longitudinal sections of the material web wrap around one measuring segment each, the measuring segments for measuring the web tensions of the longitudinal strips of the longitudinally cut material web being positioned and locked on the axle with spaced apart roll shells,
- the measuring segments each comprise a load cell that serves to determine the web tension of the longitudinal section of the material web wrapped around the respective measuring segment and that provides a mount with which the measuring segment is mounted on the axle, and
- the axle is furnished with electrical conductors that extend substantially in the axial direction across the entire width, that are axially contactable at every position and with which the measuring signals supplied by the load cells of the measuring segments are conductible to an evaluation unit arranged on one axle end.

## Revendications

1. Dispositif (20) d'enroulement d'une bande de matière coupée en longueur avec plusieurs bandes longitudinales (12) sur une pluralité de manchons d'enroulement (16) respectivement pour un rouleau d'enroulement, avec
- un axe (24) et une pluralité d'entraînements d'enroulement (22) de forme annulaire placés sur l'axe, qui peuvent être actionnés individuellement dans leur position de fonctionnement et qui sont agencés sur leur face extérieure respectivement pour recevoir un manchon d'enroulement (16) pour l'enroulement d'une bande longitudinale (12) de la bande de matière,
- **caractérisé en ce que** chaque entraînement d'enroulement (22) forme un moteur électrique à induit extérieur, et comprend un manchon intérieur statique (40) et un manchon extérieur rotatif (50), sachant que
- le manchon intérieur statique (40) est placé sécurisé en rotation sur l'axe (24) et porte sur sa face extérieure un stator (44) avec bobinages de stator du moteur électrique, ainsi que des roulements (48) pour recevoir le manchon extérieur rotatif (50) et
- le manchon extérieur rotatif (50) sur les roulements (48) porte sur sa face intérieure un dispositif de production d'un champ magnétique d'excitation (52), qui forme l'induit extérieur du moteur électrique et comporte sur sa face extérieure un dispositif de blocage (58) pour les manchons d'enroulement à recevoir, et
- les entraînements d'enroulement (22) peuvent être déplacés séparément sur l'axe (24) et bloqués dans une position de fonctionnement axiale dans laquelle ils peuvent être actionnés individuellement.

2. Dispositif selon la revendication 1, **caractérisé en ce que** le système de production d'un champ magnétique d'excitation est formé par une pluralité d'aimants permanents (52).

3. Dispositif selon au moins l'une quelconque des revendications 1 à 2, **caractérisé en ce que** l'axe est doté de conducteurs électriques (28) s'étendant en direction axiale pour l'essentiel sur toute la largeur, qui peuvent être mis en contact axialement à chaque emplacement et avec lesquels les entraînements d'enroulement (22) peuvent être alimentés dans leurs positions de fonctionnement en énergie électrique et en données de fonctionnement et peuvent être de ce fait actionnés individuellement.

4. Dispositif selon la revendication 3, **caractérisé en ce que** les conducteurs électriques (28) de l'axe comprennent des rails conducteurs de courant, qui sont disposés dans une chambre de guidage axiale (64) de l'axe.

5. Dispositif selon la revendication 3 ou 4, **caractérisé en ce que** chaque entraînement d'enroulement est équipé d'une partie de puissance séparée (74), qui peut être activée par les conducteurs électriques (28) de l'axe.

6. Dispositif selon au moins l'une quelconque des revendications 1 à 5, **caractérisé en ce que** le manchon intérieur statique (40) est doté d'un support de couple (42) de sécurisation de rotation, qui vient en prise de préférence dans un logement (60) dans le profilé axial de l'axe (24).

7. Dispositif selon au moins l'une quelconque des revendications 1 à 6, **caractérisé en ce que** l'axe comporte une rainure axiale (62) et une barrette de serrage disposée dans la rainure pour le blocage des entraînements d'enroulement, laquelle peut être activée de préférence par air comprimé.

8. Dispositif selon au moins l'une quelconque des revendications 1 à 7, **caractérisé en ce que** l'axe comporte au moins un trou (66) pour un conduit d'eau de refroidissement.

9. Dispositif selon au moins l'une quelconque des revendications 1 à 8, **caractérisé en ce que** l'axe (24) est constitué sous la forme d'un profilé extrudé avec des évidements (60, 62, 64, 66), sachant de préférence qu'un évidement (60) sert à loger le support de couple du manchon intérieur statique et/ou un évidement (64) forme une chambre de guidage pour les rails conducteurs de courant axiaux et/ou un évidement (62) forme une rainure axiale pour la barrette de serrage pour le blocage des entraînements d'enroulement et/ou au moins un évidement (66) forme un trou pour la formation d'un conduit de refroidissement.

10. Dispositif selon au moins l'une quelconque des revendications 1 à 9, **caractérisé en ce qu'**au moins deux, trois, quatre entraînements d'enroulement (22) ou plus sont disposés sur l'axe (24).

11. Dispositif selon au moins l'une quelconque des revendications 1 à 10, **caractérisé en ce que** N entraînements d'enroulement (22) sont disposés espacés et bloqués sur l'axe pour l'enroulement d'une bande de matière (10) coupée en longueur avec N ≥ 2 bandes longitudinales (12) et se trouvent favorablement en contact électrique avec des conducteurs de courant (28), en particulier des rails conducteurs de courant de l'axe.

12. Dispositif selon au moins l'une quelconque des revendications 1 à 11, **caractérisé en ce que** le dispositif d'enroulement d'une bande de matière coupée en longueur est conçu et agencé avec une largeur totale de 2,50 m ou moins, en particulier 2,00 m ou moins.

13. Système (100) pour l'enroulement régulé d'une bande de matière coupée à longueur (10) avec plusieurs bandes longitudinales (12) sur une pluralité de manchons d'enroulement (16) respectivement pour un rouleau d'enroulement, avec
- un dispositif d'enroulement (20) selon l'une quelconque des revendications 1 à 12, sachant qu'à chacune des bandes longitudinales à enrouler (12) est attribué un entraînement d'enroulement (22) à commande individuelle du dispositif d'enroulement,
- un dispositif de mesure de force (80) pour la saisie des tractions de bande des bandes longitudinales (12) de la bande de matière passant coupée et
- un système de régulation (90), qui est agencé et conçu pour saisir au moyen du dispositif de mesure de force (80) les tractions de bande dans les nombreuses bandes longitudinales (12) de la bande de matière, pour comparer les tractions de bande aux tractions de bande théoriques des bandes longitudinales individuelles (12) pour l'enroulement et activer sur la base de la comparaison les entraînements d'enroulement (22) attribués du dispositif d'enroulement (20) pour adapter les tractions de bande saisies aux tractions de bande théoriques prédéterminées.

14. Système (100) selon la revendication 13, **caractérisé en ce que**
- le dispositif de mesure de force comporte un axe et un rouleau de mesure soutenu sur l'axe, entouré par la bande de matière,
- le rouleau de mesure est constitué sous la forme d'un rouleau de mesure segmenté avec deux segments de mesure ou plus, lesquels peuvent être déplacés séparément sur l'axe et bloqués sur l'axe dans une position de mesure, pour positionner les segments de mesure selon les positions de mesure souhaitées en direction transversale de la bande de matière de telle manière que les sections longitudinales de la bande de matière enveloppent respectivement un segment de mesure, sachant que les segments de mesure sont positionnés et bloqués avec des gaines de roulement espacées sur l'axe pour la saisie des tractions de bande des bandes longitudinales de la bande de matière coupée à longueur,
- les segments de mesure comprennent respectivement un enregistreur de force, qui sert à déterminer la traction de bande de la section longitudinale de la bande de matière, entourant le segment de mesure respectif et qui fournit une fixation avec laquelle le segment de mesure est placé sur l'axe, et
- l'axe est doté de conducteurs électriques s'étendant pour l'essentiel en direction axiale sur toute la largeur, qui peuvent être mis en contact axialement à chaque emplacement et avec lesquels les signaux de mesure fournis par l'enregistreur de force des segments de mesure peuvent être dirigés vers une unité d'évaluation disposée à une extrémité d'axe.
